# EUROPEAN PATENT SPECIFICATION

(11) **EP 2 279 231 B1**
(45) Date of publication and mention of the grant of the patent: **20.06.2012**
(21) Application number: 09735390.8
(22) Date of filing: 17.04.2009
(51) Int. Cl.: C09K 11/59

(54) **METHOD FOR THE PREPARATION OF OPTICALLY CLEAR SOLUTION OF SILICON NANOCRYSTALS WITH SHORT-WAVELENGTH LUMINESCENCE**
VERFAHREN FÜR DIE ZUBEREITUNG EINER OPTISCH KLAREN SILICIUMNANOKRISTALLLÖSUNG MIT KURZWELLIGER LUMINESZENZ
PROCÉDÉ POUR LA PRÉPARATION D'UNE SOLUTION OPTIQUEMENT CLAIRE DE NANOCRISTAUX DE SILICIUM AVEC UNE LUMINESCENCE À COURTE LONGUEUR D'ONDE

(30) Priority: 22.04.2008 CZ 20080246
(43) Date of publication of application: 02.02.2011
(73) Proprietor: Institute of Physics of the AS CR, v.v.i., 182 21 Praha 8 (CZ)
(72) Inventor: KUSOVA, Katerina, Praha 9- Vinor 190 17 (CZ); CIBULKA, Ondrej, Praha 5 - Hlubocepy 152 00 (CZ); DOHNALOVA, Katerina, 198 00 Praha 9 (CZ); ZIDEK, Karel, 747 05 Opava (CZ); FUCIKOVA, Anna, 675 02 Konesin (CZ); PELANT, Ivan, 120 00 Praha 2 (CZ)
(74) Representative: Beetz & Partner
(86) International application number: PCT/CZ2009/000053
(87) International publication number: WO 2009/129757

(56) References cited:
- WO-A2-2007/117265
- VALENTA J ET AL: "Colloidal suspensions of silicon nanocrystals: from single nanocrystals to photonic structures" OPTICAL MATERIALS, ELSEVIER SCIENCE PUBLISHERS B.V. AMSTERDAM, NL, vol. 27, no. 5, 1 February 2005 (2005-02-01), pages 1046-1049, XP025328179 ISSN: 0925-3467 [retrieved on 2005-02-01]
- SVRCEK V ET AL: "Unaggregated silicon nanocrystals obtained by ball milling" JOURNAL OF CRYSTAL GROWTH, ELSEVIER, AMSTERDAM, NL, vol. 275, no. 3-4, 1 March 2005 (2005-03-01), pages 589-597, XP004798824 ISSN: 0022-0248
- SVRCEK V ET AL: "Photoluminescence studies from silicon nanocrystals embedded in spin on glass thin films" JOURNAL OF LUMINESCENCE, AMSTERDAM, NL, vol. 101, no. 4, 1 April 2003 (2003-04-01) , pages 269-274, XP004415294 ISSN: 0022-2313

## Description

### Technical field

The invention relates to the preparation of small silicon nanocrystals with stable luminescence properties and their homogeneous dispersion in an organic solvent.

### Background art

Silicon nanocrystals with the size of several nanometers have been intensely studied by both physicists and chemists for nearly twenty years. The keen interest dates back to 1990, when L. Canham published an article on intense photoluminescence of the so-called porous silicon, observable in the visible region of the electromagnetic spectrum at room temperature. It soon came to light that porous silicon is, in fact, composed of loosely interconnected silicon nanocrystals of spherical or ellipsiodal shape.

The large application potential of luminescent silicon nanocrystals is caused by the critical developments in CMOS technology of silicon integrated circuits. The structural detail of the circuit is being continuously decreased and, simultaneously, the number of circuit elements on the silicon chip rises according the so-called Moore's law. This results, on the one hand, in the increase of the circuits' performance, however, such a high integration also leads to the need for a dense network of long electrical interconnects between individual transistors. Consequently, the transfer of information is delayed, which slows down the operation of the whole circuit. Moreover, the long metal interconnects generate Joule's heat which strongly heats up the whole chip. One of possible solutions to this problems is a qualitatively new architecture of the integrated silicon circuit in which information is not transferred electrically but optical interconnects are used instead. Unlike in electrical interconnects, the information transfer in optical interconnects is fast and does not generate any heat. However, such a new architecture strictly requires the realization of a suitable electrically-driven miniature light source integrated on the chip, preferably a light-emitting diode or an injection laser.

Nowadays, several trends in the development of a silicon-based light source are under close scrutiny. One of the possibilities is the integration of existing injection lasers made of III-V semiconductors such as GaAs and their alloys directly on a silicon chip. Such integration, however, is somewhat troublesome due to a considerable mismatch of the lattice constant of these materials and silicon. Another way to realize a silicon-based light source is the fabrication of an injection laser directly from silicon. Nevertheless, more than forty years ago, the possibility of intense luminescence, let alone lasing, from bulk crystalline silicon was theoretically proved impossible due to the parameters of the electron band structure of monocrystalline silicon, particularly due to its indirect band-gap. More or less sophisticated experimental attempts to circumvent this fundamental limitation have been unsuccessful so far as well. Brightly luminescent silicon nanocrystals, however, hold promise for helping to solve this problem.

The article of J. Valenta et al. "Colloidal suspensions of silicon nanocrystals: from single nanocrystals to photonic structures", Optical Materials, vol. 27, no. 5, (2005-02-01), pages 1046-1049, discloses the preparation of colloidal suspensions of silicon nanocrystals in different organic solvents: Ethanol, isobutanol, heptanol, hexane, heptane are mentioned explicitly. The Si nanocrystals were prepared by mechanical pulverization of the etched porous layer of a silicon crystal, followed by dispersion in a solvent, mixing, sedimentation and filtering.

The document WO 2007/117265 discloses the use of mesitylene, xylene, or toluene for dissolving group IV semiconductor nanoparticles. It is mentioned that these aromatic solvents might be used as reaction solvents for silicon nanoparticles. Silicon nanoparticles are heated in a mesitylene solution until that solution becomes clear.

Silicon nanocrystals can nowadays be prepared by several methods. Above-mentioned porous silicon, which is prepared by electrochemical etching of silicon wafers in the solution of hydrofluoric acid, consists of silicon nanocrystals. Other preparation methods include Si⁺-ion implantation into quartz followed by high-temperature annealing, plasma-enhanced chemical vapor deposition of substoichiometric silicon oxide SiOₓ followed by high-temperature annealing, electron lithography with reactive ion etching and consequent oxidation, reactive deposition of silicon on quartz (electron-beam ablation of silicon while radio-frequency plasma is used as a source of oxygen), chemical deposition of amorphous silicon/glass superlattices with consequent annealing or pyrolysis of silane either by direct anneal or with a CO₂ laser.

The common denominator of these methods is, however, a large size distribution of the prepared nanocrystals with diameters usually between 3 and 6 nanometers. Such "large" nanocrystals are luminescent (usually in the red spectral region with a maximum around 800 nm) although their band structure keeps its indirect character, which hinders optical gain. Smaller silicon nanocrystals (with the diameter of about 1-2 nm), however, are much more promising for stimulated emission since they luminesce at the shorter-wavelength spectral region due to the quantum size effect. Owing to Heisenberg uncertainty principle, a relaxation of the momentum conservation law occurs in small nanocrystals and direct radiative recombination of electron-hole pairs over the band-gap starts to play an important role.

Nonetheless, another unfavorable factor connected with the stimulated emission from silicon nanocrystals is their tendency to agglomerate into larger cluster with sizes up to 100 nm. The generated luminescence then undergoes Mie scattering on these clusters, giving rise to optical losses acting against the amplification of luminescence by stimulated emission.

### Disclosure of the invention

The present invention provides a method which overcomes the above-mentioned limitations by preparing small (≤ 2 nm) isolated silicon nanocrystals by a modified electrochemical etching and a subsequent original chemomechanical procedure, which leads to their dispersion in a liquid matrix of an organic solvent. The prepared solution is optically clear and exhibits bright yellow photoluminescence with emission-band maximum around 550-570 nm. Nowadays, several laboratories all over the world are focused on the development of the so-called functionalization of silicon nanoparticles' surface, aimed at the preparation of true solutions with stable luminescence. These methods are usually based on the use of high temperatures and/or pressures, inert atmosphere or other techniques requiring advanced equipment. The advantage of the preparation of solutions with silicon nanocrystals according to the present invention is the fact that the whole procedure takes place in air, at atmospheric pressure and room temperature and using commonly available chemicals.

The preparation method consists of several steps. Firstly, silicon wafers are electrochemically etched. Unlike the commonly used composition of the etching bath (hydrofluoric acid with ethanol), 30% hydrogen peroxide is added to the etching bath to enhance the etching procedure. Freshly electrochemically etched silicon wafers are immediately immersed in 30% hydrogen peroxide for several minutes while minimizing their exposure to atmospheric oxygen. H₂O₂ causes further increase in pore sizes of porous silicon, i.e. the size of silicon nanocrystals decreases. After proper rinsing, etched silicon wafers are stored in an ageing chamber with controlled temperature and humidity but with normal air pressure. After several-day ageing the wafers exhibit bright yellow photoluminescence (often with a blue tint) when excited with a UV lamp. Whitish powder of silicon nanocrystals, composed of clusters of nanocrystals, is obtained by a mechanical pulverization of the porous-silicon layer (with the thickness of about 10 micrometers). The silicon wafer can be reused for electrochemical etching after a rinse in NaOH solution. A weighted amount of nanocrystalline powder is then mixed with a methylated benzene-based solvent. Xylene appears to be suitable for this purpose. Other solvents, such as trimethylbenzene, etc., can also be used. An ultrasonic bath should be utilized to break apart the largest clusters. The resulting suspension is luminescent, but murky due to still prevailing agglomeration of silicon nanocrystals. When continuous magnetic stirring with a chosen frequency of rotation of an inert magnetic stirrer is applied, separation into two phases occurs after several days: individual small nanocrystals are separated from larger agglomerates. The agglomerates partly sediment on the walls, partly circulate in the suspension and exhibit yellow photoluminescence. After long-term stirring (several weeks) a yellow photoluminescence band of small dissolved nanocrystals appears. When the stirring is finished, the large agglomerates settle down at the bottom of the vessel, while the rest of the suspension is optically clear with yellowish or brownish tint. The liquid phase can be separated from the by-product agglomerates using e.g. a syringe and one obtains the resulting optically clear solution containing small silicon nanocrystals with bright yellow photoluminescence. Eventually, it is also possible to add another dose of nanocrystalline powder and keep on stirring, which results in the increase of the concentration of silicon nanocrystals and consequently also in the increase of the intensity of yellow photoluminescence. The optically clear solution is again obtained by a transfer to a new vessel. The solution keeps both its high luminescence and optical clearness (i.e. small nanocrystals neither sediment nor further agglomerate) in the long term even after several months without stirring.

The said preparation method can be modified by using a standard electrochemical etching bath without H₂O₂ and skipping also the H₂O₂ post-etching and ageing stages in the preparation of porous silicon. Pulverized nanocrystalline powder is then dispersed in ethanol and this suspension undergoes ultrasonication procedure for at least 30 minutes. Afterwards, it is left to spontaneously sediment. The agglomerates of nanocrystals, partly broken apart with the previous sonication procedure, settle down at the bottom of the vessel and are let to dry ("first sediment"). The obtained powder is mixed with methylated benzene-based solvent and the above-described method for the mechanochemical dissolution of nanocrystals in the solvent is used. The sedimentation procedure can be applied several times.

### Example

Nanocrystalline powder was obtained by electrochemical etching of p-type silicon wafers (boron-doped, resistivity of 0.075 Ωcm) in the etching bath composed of 50% hydrofluoric acid (13 ml), 99.9% ethanol (37 ml) and 30% hydrogen peroxide (2 ml) with the current density of 2.6 mA/cm². The silicon wafers then underwent a post-etching treatment in 30% hydrogen peroxide for 12 minutes, aged for 5 days at atmospheric pressure, temperature around 30 °C and air humidity around 55%.

Whitish nanocrystalline powder was obtained through mechanical pulverization. One etching procedure (the topmost layer of porous silicon of the area of 9.6 cm²) yields around 0.5-1 mg of powder. Powder from several etching procedures was mixed to gain a sufficient amount.

2.5 mg of the obtained powder were dispersed in 500 µl of xylene (in an optical cuvette with internal dimensions of 1.0x0.6 cm²) using a 15-minute ultrasonic bath. The suspension was magnetically stirred (approximately 600 rpm) for 5 weeks. During the stirring, photoluminescence spectra excited with 325-nm and 442-nm laser line were acquired. The intensity of the yellow emission band gradually increased. Owing to the evaporation during stirring, xylene was added to the suspension to keep its amount constant. The increase of the intensity of yellow luminescence was observed and when it approached saturation, stirring was stopped, the remaining large agglomerates settled down and the resulting clear, though yellowish solution was transferred using a syringe to a new vessel.

### Industrial applicability

The described method of preparation of optically clear solutions of silicon nanocrystals is intended mainly for the basic research of optical properties of these nanocrystals. It can also be exploited, however, for the manufacturing of these solutions for local fluorescent marks in biology and medicine and for luminescent sensors. After an eventual extraction from the solution, the nanocrystals can be used as an active light-emitting medium in the components for silicon (nano)photonics, such as light-emitting diodes, (nano)silicon laser, etc.

## Claims

1. A method for the preparation of optically clear solution of silicon nanocrystals with short-wavelength luminescence by electrochemical etching of silicon wafers in an etching bath composed of hydrofluoric acid and ethanol, **characterized in that** the layer of porous silicon formed during the etching is rinsed and mechanically pulverized from the silicon wafer, the obtained powder is dispersed in a methylated benzene-based solvent, the suspension is continuously stirred with an inert stirrer, the stirring is stopped after the emergence of optically clear solution exhibiting yellow photoluminescence and the solution is transferred to a new vessel.

2. The method according to claim 1, **characterized in that** the photoluminescence spectrum of the suspension excited with 325-nm and 442-nm wavelength is monitored at regular intervals during stirring.

3. The method according to claims 1 or 2, **characterized in that** the etching bath is composed of hydrofluoric acid, ethanol and hydrogen peroxide.

4. The method according to claims 2 or 3, **characterized in that** the electrochemically etched silicon wafers with the porous silicon layer are immediately post-etched in a 30% solution of hydrogen peroxide.

5. The method according to claims 3 or 4, **characterized in that** the etched silicon wafers, rinsed with distilled water, undergo an ageing process in air at atmospheric pressure until the porous silicon layer exhibits stable yellow photoluminescence.

6. The method according to claims 1 or 2, **characterized in that** the pulverized powder is dispersed in ethanol and after an ultrasonic bath is let to spontaneously sediment, with subsequent drying of the sediment settled at the bottom of the vessel.

7. The method according to claim 5, **characterized in that** the ageing process takes place in a chamber with temperatures between 20 and 35 °C and humidity between 40 and 70%.

8. The method according to claims 1 or 2 or 5 or 6 or 7, **characterized in that** the powder is ultrasonicated in a methylated benzene-based solvent.

9. The method according to claims 1 or 2 or 5 or 6 or 7 or 8, **characterized in that** the methylated benzene-based solvent is xylene.

10. The method according to claims 1 or 2 or 5 or 6 or 7 or 8, **characterized in that** the methylated benzene-based solvent is trimethylbenzene.

## Patentansprüche

1. Verfahren zum Zubereiten einer optisch klaren Lösung von Silizium-Nanokristallen mit kurzwelliger Lumineszenz durch elektrochemisches Ätzen von Siliziumwafern in einem Ätzbad, welches aus Flusssäure und Ethanol zusammengesetzt ist,
**dadurch gekennzeichnet, dass**
die während des Ätzvorgangs gebildete Schicht aus porösem Silizium von dem Siliziumwafer abgespült und mechanisch pulverisiert wird, das so gewonnene Pulver in einem methylierten Lösungsmittel auf Benzolbasis dispergiert wird, die Suspension stetig mit einem inerten Rührer gerührt wird, das Rühren beim Erscheinen einer optisch klaren Lösung unterbrochen wird, welche gelbe Photoluminiszenz zeigt, und die Lösung in ein neues Gefäß überführt wird.

2. Verfahren nach Anspruch 1, **dadurch gekennzeichnet, dass** während des Rührens das Photolumineszenz - Spektrum der mit einer Wellenlänge von 325nm und 442nm angeregten Suspension in regelmäßigen Intervallen überwacht wird.

3. Verfahren nach den Ansprüchen 1 oder 2, **dadurch gekennzeichnet, dass** das Ätzbad aus Flusssäure, Ethanol und Wasserstoffperoxid zusammengesetzt ist.

4. Verfahren nach den Ansprüchen 2 oder 3, **dadurch gekennzeichnet, dass** die elektrochemisch geätzten Siliziumwafer mit der porösen Siliziumschicht unmittelbar in einer 30%-igen Wasserstoff-Peroxid-Lösung nachgeätzt werden.

5. Verfahren nach den Ansprüchen 3 oder 4, **dadurch gekennzeichnet, dass** die mit destilliertem Wasser gespülten Siliziumwafer im Luft bei Atmosphärendruck einem Alterungsprozess unterworfen werden, bis die poröse Siliziumschicht eine stabile gelbe Photolumineszenz zeigt.

6. Verfahren nach den Ansprüchen 1 oder 2, **dadurch gekennzeichnet, dass** pulverisierte Pulver in Ethanol dispergiert wird und nach einem Ultraschallbad spontan sedimentieren gelassen wird, wobei anschließend das Sediment, welches sich auf dem Boden des Gefäßes abgesetzt hat, trocknen gelassen wird.

7. Verfahren nach Anspruch 5, **dadurch gekennzeichnet, dass** der Alterungsprozess in einer Kammer mit Temperaturen zwischen 20 und 35°C und einer Luftfeuchtigkeit zwischen 40 und 50% stattfindet.

8. Verfahren nach den Ansprüchen 1 oder 2 oder 5 oder 6 oder 7, **dadurch gekennzeichnet, dass** das Pulver in einem methylierten Lösungsmittel auf Benzolbasis ultraschallbehandelt wird.

9. Verfahren nach den Ansprüchen 1 oder 2 oder 5 oder 6 oder 7 oder 8, **dadurch gekennzeichnet, dass** das methylierte Lösungsmittel auf Benzolbasis Xylol ist.

10. Verfahren nach den Ansprüchen 1 oder 2 oder 5 oder 6 oder 7 oder 8, **dadurch gekennzeichnet, dass** das methylierte Lösungsmittel auf Benzolbasis Trimethylbenzol ist.

## Revendications

1. Procédé pour la préparation d'une solution optiquement claire de nanocristaux de silicium avec une luminescence à courte longueur d'onde à l'aide d'une attaque électrochimique de plaquettes de silicium dans un bain d'attaque composé d'acide fluorhydrique et d'éthanol, **caractérisé en ce que** la couche de silicium poreux formée durant l'attaque est rincée et pulvérisée mécaniquement à partir de la tranche de silicium, la poudre obtenue est dispersée dans un solvant à base de benzène méthylé, la suspension est continuellement remuée avec un agitateur inerte, l'agitation est arrêtée après l'apparition d'une solution optiquement claire présentant une photoluminescence jaune et la solution est transférée dans un nouveau récipient.

2. Le procédé selon la revendication 1, **caractérisé en ce que** le spectre de photoluminescence de la suspension excité avec une longueur d'onde de 325 nm et de 442 nm est contrôlé à intervalles réguliers durant l'agitation.

3. Le procédé selon les revendications 1 ou 2, **caractérisé en ce que** le bain d'attaque est composé d'acide fluorhydrique, d'éthanol et de peroxyde d'hydrogène.

4. Le procédé selon les revendications 2 ou 3, **caractérisé en ce que** les plaquettes de silicium soumises à une attaque électrochimique avec la couche de silicium poreux sont immédiatement soumises à une post-attaque dans une solution composée de 30 % de peroxyde d'hydrogène.

5. Le procédé selon les revendications 3 ou 4, **caractérisé en ce que** les plaquettes de silicium attaquées, rincées avec de l'eau distillée, subissent un processus de vieillissement à l'air à la pression atmosphérique jusqu'à ce que la couche de silicium poreux présente une photoluminescence jaune stable.

6. Le procédé selon les revendications 1 ou 2, **caractérisé en ce que** la poudre pulvérisée est dispersée dans de l'éthanol et, après un bain ultrasonique, on la laisse se déposer spontanément et sécher au fond du récipient.

7. Le procédé selon la revendication 5, **caractérisé en ce que** le processus de vieillissement se déroule dans une chambre avec des températures comprises entre 20 et 35°C et une humidité comprise entre 40 et 70 %.

8. Le procédé selon les revendications 1, 2, 5, 6 ou 7, **caractérisé en ce que** la poudre est soumise à une ultrasonication dans un solvant à base de benzène méthylé.

9. Le procédé selon les revendications 1, 2, 5, 6, 7 ou 8, **caractérisé en ce que** le solvant à base de benzène méthylé est du xylène.

10. Le procédé selon les revendications 1, 2, 5, 6, 7 ou 8, **caractérisé en ce que** le solvant à base de benzène méthylé est du triméthylbenzène.
